# EUROPEAN PATENT APPLICATION

(11) **EP 1 683 558 A1**
(43) Date of publication of application: **26.07.2006**
(21) Application number: 05254432.7
(22) Date of filing: 15.07.2005
(51) Int. Cl.: A63H 17/28, A63C 17/26, B60Q 1/32, B62J 6/20, A63H 17/26

(54) **Self-powered lighting for wheeled arrangements**

(30) Priority: 24.01.2005 US 41657
(71) Applicant: K & B International Limited, TST East Kowloon (HK)
(72) Inventor: Cheng, Chen Wei, Dongguan City, Guangdong Province (CN); Tong, Chen Wei, Dongguan City, Guangdong Province (CN); Pei, Chen Wei, Dongguan City, Guangdong Province (CN)
(74) Representative: Maggs, Michael Norman

(57) **Abstract**

A rotating wheel causes lights on and off the wheel to flash to create a light display. Moving pole teeth between a permanent magnet and an electromagnetic coil induce in the coil electrical pulses for flashing the lights.

## Description

The present invention generally relates to electrical lighting that is powered by circuitry supported by wheels and, more particularly, to self-generating the power for displaying the lighting during rotation of the wheels.

It is generally known from Chinese Patent No. CN 2625000Y and CN 2624998Y to provide lights on wheels, and from U.S. Patent No. 5,552,972 to provide a wheel capable of self-powered illumination during wheel rotation. In preferred applications, the lighted wheels are on novelty items such as toy cars or in-line skates. The known constructions, however, are complex and expensive, especially when light flashing is desired for increased visual interest.

Accordingly, it is a general object of this invention to advance the state of the art of providing wheels capable of self-illumination during rotation.

More particularly, it is an object of the present invention to provide wheels with flashing lights whose rate of flashing corresponds to the rotational speed of the wheels.

Still another object of the present invention is to provide a compact, cost-effective wheel for use with many different types of wheeled items such as toy cars, roller skates, skate boards and bicycles, as well as other recreational and non-recreational items having wheels.

In keeping with the above objects and others which will become apparent hereinafter, one feature of the present invention resides, briefly stated, in a self-powered lighting arrangement comprising a support having wheels. For example, the support could be a toy vehicle, a roller skate, or like recreational wheeled item, as well as non-recreational wheeled items. At least one of the wheels is rotatable about an axis. The wheel may be journaled on, or driven by, an axle. A light source, preferably a plurality of light sources, is supported by the wheel.

The arrangement includes an electrical generator coupled to the light sources for generating electrical pulses to energize the sources to emit light flashes during wheel rotation. The generator includes a permanent annular magnet and an electromagnetic annular coil coaxially mounted on the axis, at least one of the magnet and the coil being mounted on the wheel for joint rotation therewith. The magnet and the coil together bound an annular gap coaxial with the axis. An electromagnetic field spans the gap.

In accordance with this invention, a plurality of magnetic pole teeth is circumferentially arranged in succession in the gap around the axis. The teeth are mounted on the at least one of the magnet and the coil that is mounted for joint rotation with the wheel. The teeth successively pass through the electromagnetic field between the magnet and the coil in the gap to generate the electrical pulses. Each tooth generates one of the pulses. Preferably, the teeth are interdigitated and are jointly mounted with the coil.

In accordance with another feature of the invention, auxiliary light sources are mounted remotely from the wheel, and the generator is also coupled to these auxiliary sources to cause them to also emit light flashes during wheel rotation. An electrical conductor extends past the wheel to make electrical contact with the auxiliary sources. The auxiliary sources are stationary and are arranged in patterns to create an enhanced light display.
FIG. 1 is a perspective view of a radio-controlled toy car equipped with a self-powered lighting arrangement according to this invention;
FIG. 2 is an enlarged sectional view taken on line 2-2 of FIG. 1;
FIG. 3 is an exploded, perspective view of the arrangement of FIG. 2;
FIG. 4 is a perspective view of a roller skate equipped with a self-powered lighting arrangement according to this invention; and
FIG. 5 is an enlarged sectional view taken on line 5-5 of FIG. 4.

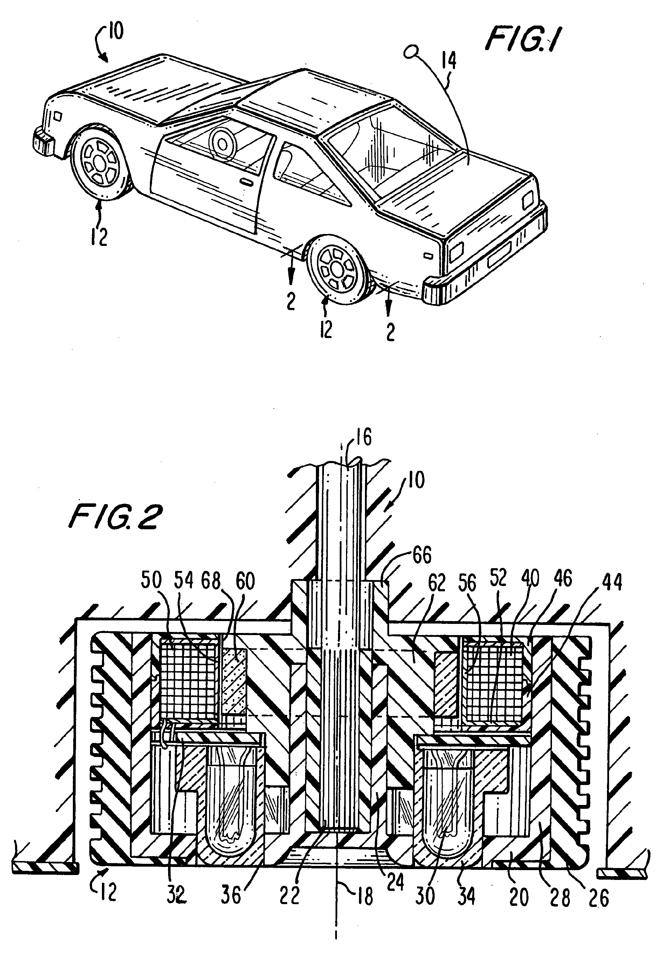

FIG. 1 depicts a radio-controlled toy vehicle 10 having a plurality of wheels 12 mounted for rotation thereon, and an antenna 14 for receiving radio frequency signals from a remote control unit (not illustrated) operative for communicating with an on-board drive motor (not illustrated) energizable for controlling movement of the vehicle.

As best seen in FIG. 2, a rear drive axle 16 is mounted on the vehicle for rotation about an axis 18. Axle 16 has a splined end 22 fixedly received in a cylindrical bore 24 of a rotary housing 20. A traction tire 26 is frictionally fitted about a cylindrical outer part 28 of the housing. When the drive axle 16 is driven by the not illustrated drive motor, the housing and the tire are jointly rotated.

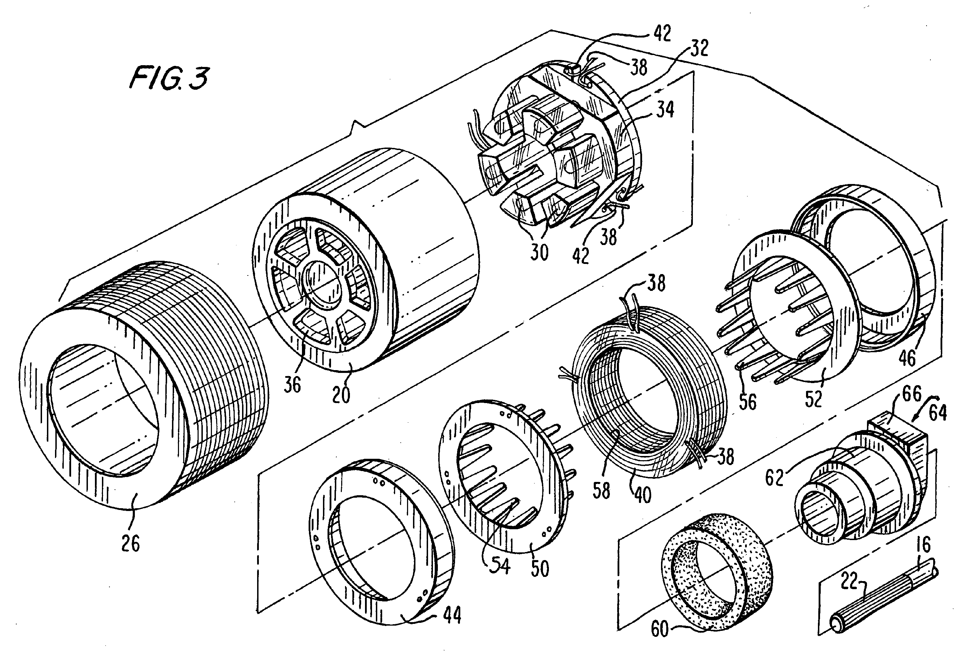

Also mounted in the housing 20 for joint rotation therewith is a plurality of light sources 30, preferably light emitting diodes (LEDs), mounted on an outer surface of a printed circuit board 32. A light-transmissive cover 34 encloses the LEDs 30. The outer axial end of the housing 20 has holes 36 (see FIG. 3) for receiving the LEDs and the portions of the cover that surround the LEDs. This fixes the LEDs and the board 32 for joint rotation with the housing.

A coil assembly is mounted on the opposite, inner surface of the board 32 and includes, as best seen in FIG. 3, an annular electromagnetic coil 40 having conductive wires 38 extending through cutouts 42 in the board 32 to connect to the LEDs. The coil assembly also includes a pair of annular insulating casing portions 44, 46 and a pair of annular conductive pole plates 50, 52 having respective sets of pole teeth 54, 56 extending axially therefrom. Casing portion 44 sandwiches the pole plate 50 between itself and one side of the coil 40, and the teeth 54 extend in one axial direction into a central opening 58 of the coil. Casing portion 46 sandwiches the pole plate 52 between itself and an opposite side of the coil 40, and the teeth 56 extend in an opposite axial direction into the central opening 58. Each set of teeth is circumferentially arranged in succession about the axis. The sets of teeth are interdigitated along an inner boundary of the central opening 58. The casing portions 44, 46 encase the coil within the housing 20. The casing portions are keyed to the housing for joint rotation with the same.

A permanent annular magnet 60 is mounted on a cylindrical portion 62 of a stationary hub 64 having a key portion 66 received in a complementarily contoured recess in the vehicle 10 to prevent the hub and the magnet supported thereon from rotating. Thus, the housing 20 and the components supported thereon rotate relative to the stationary hub and magnet during wheel rotation.

As best seen in FIG. 2, the coil 40 coaxially surrounds the magnet 60 with a clearance or annular gap 68 across which an electromagnetic field from the magnet is propagated. As each tooth passes a reference point, the electromagnetic field is affected by the presence and absence of the respective tooth, thereby generating an electrical pulse in the coil which is conducted by wires 38 to the LEDs to cause them to flash. Preferably, there are twelve teeth 54 and twelve teeth 56, thereby causing twenty-four flashes for each wheel rotation.

As described so far, the drive axle 16 and the wheel 12 are driven by an on-board drive motor. The vehicle could also be manually rolled over the floor to cause the wheels and the axle 16 to be rotated by frictional engagement with the floor. The flashing result would be the same.

Although only described in connection with one of the wheels 12, each wheel 12 could be equipped with its own self-powered lighting arrangement, thereby causing each wheel to emit multiple light flashes per wheel rotation. In still another modification, it is possible to use a single self-powered lighting arrangement provided on one wheel, and to conduct the electrical pulses to LEDs provided on the other wheels, or on other parts of the vehicle, e.g., headlights or taillights.

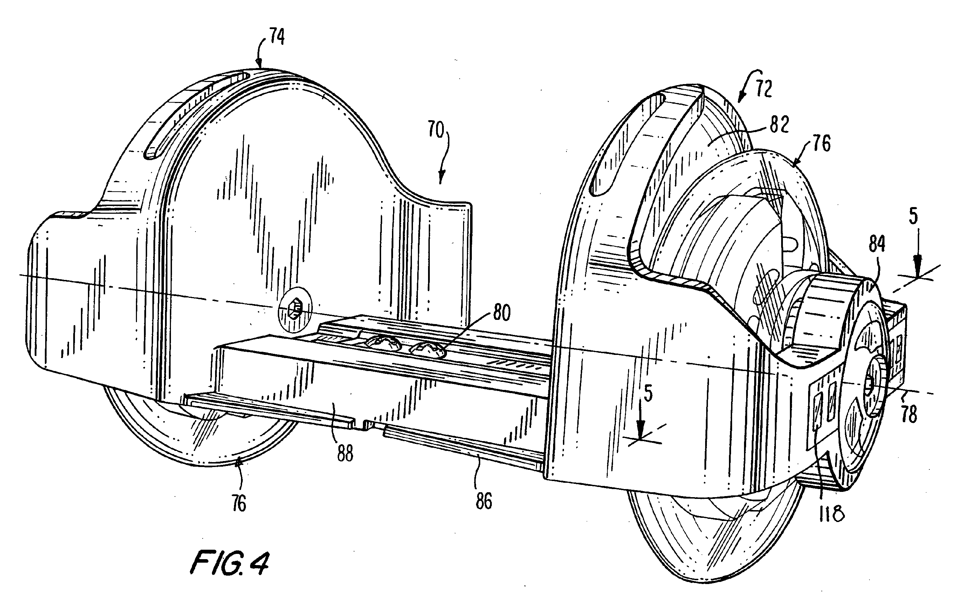

Another embodiment of a self-powered lighting arrangement that causes lights to flash due to frictional engagement of a wheel with the ground is depicted in FIGS. 4-5 as a roller skate 70. Skate 70 is one of a pair, each skate 70 being fitted on a respective foot of a roller skater. Skate 70 includes a pair of assemblies 72, 74 each having wheels 76 journaled thereon for rotation about an axis 78. The assemblies are axially adjustable to accommodate the width of a skater's shoe and are locked in an adjusted position by the locking screws 80. Assembly 72 has a track portion 86 slidable underneath a guide portion 88 of the assembly 74. The locking screws 80 extend through the track and guide portions.

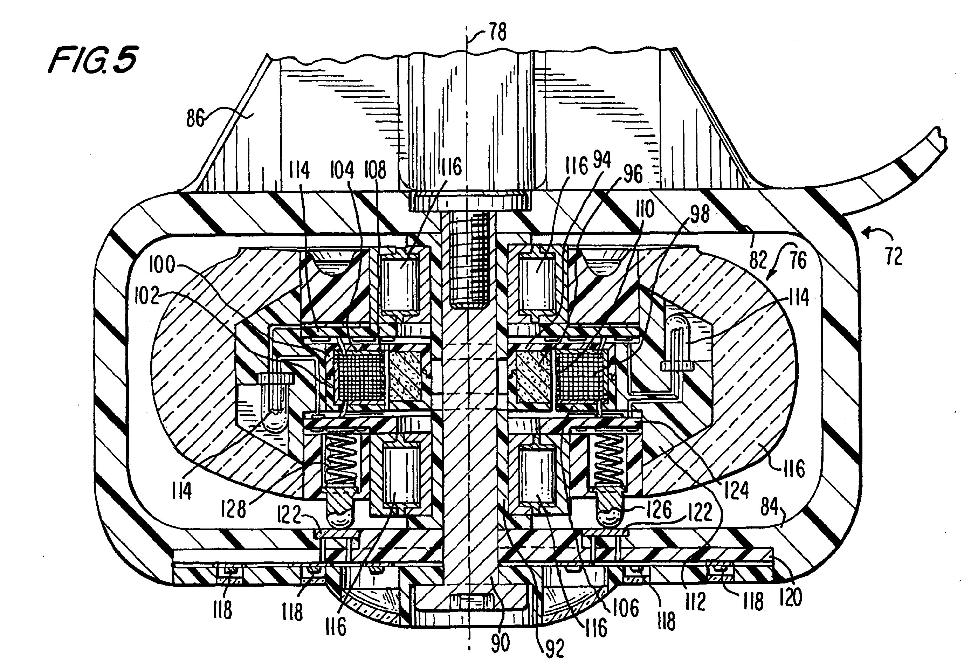

As better shown in FIG. 5, assemblies 72, 74 have inner 82 and outer 84 support portions on opposite sides of the respective wheel 76. A fixed axle 90 extends through the wheel 76 between the inner and outer skate portions 82, 84. A hollow bushing 92 enables the wheel 76 to rotate relative to the axle 90 in a friction-reduced manner.

A stationary hub 94 is fixed to the bushing 92. An annular permanent magnet 96 is fixedly mounted around the hub 94 coaxially with the axis. A coil assembly includes an annular electromagnetic coil 98, a pair of annular insulating casing portions 100, 102, and a pair of annular conductive pole pieces 104, 106 having respective sets of pole teeth 108, 110. The coil assembly is mounted on a printed circuit board 114 which is, in turn, mounted on a central wheel support 112 for joint rotation with the wheel 76. A plurality of LEDs 114 is connected to the board 114 and, in turn, to the coil 98. A translucent urethane traction tire 116 surrounds the LEDs and the wheel 76.

In a manner analogous to that described above, the magnet 96 creates a magnetic field in a gap between itself and the coil 98. The pole teeth 108, 110 are in the gap and, during wheel rotation, each tooth causes an electrical pulse to be induced in the coil 98. The pulses, in succession, are conducted to the LEDs 114 to cause them to flash, and the flashing light is seen through the tire of the rotating wheel. Rollers 116 rotatable about respective axes parallel to the axis 78 are located between the stationary bushing 92 and the wheel 76 to minimize friction during wheel rotation.

As described so far in connection with FIGS. 4-5, only the LEDs 114 within the wheel are caused to flash. Auxiliary LEDs 118 are mounted on the outer skate portion 84 and are also caused to flash. To this end, the auxiliary LEDs 118 are mounted on a printed circuit board 120 which is in electrical communication with electrical contacts 122 which are exposed at an inner surface of the outer skate portion 84. Another printed circuit board 124 is mounted within the wheel 76, and a pair of conductive pins 126 is biased by respective coil springs 128 against the board 124. Each spring 128 constantly urges its associated pin 126 outwardly through an axial passage in the wheel and into conductive contact with the contact 122. Thus, an electrically conductive path is also made from the coil 98 to the board 124 and, in turn, through the spring 128, pin 126,contact 122, and the LEDs 118.

The LEDs 118 are stationarily mounted on the outer skate portion 84 and can be arranged in any pattern, such as linear or in an annulus for creating a flashing light display of visual interest. The LEDs 114, 118 can be of different colors to enhance the light display.

What is claimed as new and desired to be protected by Letters Patent is set forth in the appended claims.

## Claims

1. A self-powered lighting arrangement, comprising:
a) a support;
b) a wheel rotatable about an axis relative to the support;
c) a light source supported by the wheel; and
d) an electrical generator coupled to the light source for generating electrical pulses to energize the source to emit light flashes during rotation of the wheel, the generator including a permanent annular magnet and an electromagnetic annular coil coaxially mounted on the axis, at least one of the magnet and the coil being mounted on the wheel for joint rotation therewith, the magnet and the coil together bounding an annular gap coaxial with the axis, and a plurality of magnetic pole teeth circumferentially arranged in the gap around the axis and mounted on said at least one of the magnet and the coil for joint rotation therewith, the teeth successively passing through an electromagnetic field between the magnet and the coil in the gap to generate the electrical pulses.

2. The arrangement of claim 1, wherein the support is a toy vehicle in which an axle is journaled, and wherein the wheel is mounted on the axle for joint rotation therewith.

3. The arrangement of claim 2, wherein the toy vehicle is a remote controlled car having an antenna, and wherein the axle and the wheel are driven in response to receipt of radio frequency signals received by the antenna.

4. The arrangement of claim 1, wherein the wheel has a traction tire removably mounted thereon.

5. The arrangement of claim 1, wherein additional light sources are supported by the wheel, each light source being a light emitting diode for emitting the light flashes visibly exteriorly of the wheel.

6. The arrangement of claim 1, wherein the support includes a stationary hub on which the magnet is mounted, and wherein the wheel includes a housing on which the coil is mounted.

7. The arrangement of claim 6, wherein the hub has a cylindrical portion around which the magnet supportably extends, and wherein the coil is encased in an annular casing supported on the housing.

8. The arrangement of claim 7, wherein a first set of the pole teeth extends from, and is integral with, a first annular pole plate mounted in the casing; and wherein a second set of the pole teeth extends from, and is integral with, a second annular pole plate mounted in parallelism with the first pole plate in the casing; and wherein the teeth of the first and second sets are interdigitated.

9. The arrangement of claim 6, wherein the housing has a hole through which the light source at least partly extends, and wherein the light source is mounted on a printed circuit board in the housing.

10. The arrangement of claim 1, wherein the support includes inner and outer support portions on opposite axial sides of the wheel; and an axle fixed to, and extending between, the inner and outer support portions; and wherein the wheel is journaled on the axle.

11. The arrangement of claim 10, wherein an auxiliary light source is supported on the outer support portion, and wherein the electrical generator is also coupled to the auxiliary light source to emit light flashes during rotation of the wheel.

12. The arrangement of claim 11, wherein the outer support portion has an electrically conductive path to the auxiliary light source, and wherein the wheel has an opening through and past which an electrical conductor extends into electrical contact with the conductive path.

13. The arrangement of claim 12, wherein the conductor is a spring-mounted pin in constant contact with the conductive path.

14. The arrangement of claim 1, wherein the wheel includes a tire constituted of a translucent urethane in which the light source is contained.

15. The arrangement of claim 10, wherein the support is part of a first roller skate assembly; and further comprising a second roller skate assembly mirror-symmetrically arranged relative to the first assembly and adjustably connected to the first assembly to comprise a roller skate.

16. A self-powered lighting arrangement, comprising:
a) a toy vehicle having wheels, at least one of the wheels being mounted on a driven axle for rotation about an axis;
b) a plurality of light sources supported by the at least one wheel; and
c) an electrical generator coupled to the light sources for generating electrical pulses to energize the sources to emit light flashes during rotation of the at least one wheel, the generator including a permanent annular stationary magnet fixed to the vehicle, and an electromagnetic annular coil mounted for joint rotation with the at least one wheel, the magnet and the coil being coaxially mounted on the axis and together bounding an annular gap coaxial with the axis, and a plurality of magnetic pole teeth circumferentially arranged in the gap around the axis and mounted on the coil for joint rotation with the at least one wheel, the teeth successively passing through an electromagnetic field between the magnet and the coil in the gap to generate the electrical pulses.

17. The arrangement of claim 16, wherein the plurality of light sources is provided for each wheel.

18. A self-powered lighting arrangement, comprising:
a) a roller skate having wheels rotatable about an axis, the wheels being adjustably axially movable toward and away from each other, each wheel being journaled on an axle between inner and outer skate portions on opposite axial sides of a respective wheel;
b) a plurality of light sources supported by each wheel and by each outer skate portion; and
c) a plurality of electrical generators, one for each wheel, coupled to the light sources for generating electrical pulses to energize the sources to emit light flashes during rotation of the wheels, each generator including a permanent annular stationary magnet and an electromagnetic annular coil mounted for rotation with a respective wheel, the magnet and the coil of each generator being coaxially mounted on the axis and together bounding an annular gap coaxial with the axis, each generator further including a plurality of magnetic pole teeth circumferentially arranged in a respective gap around the axis and mounted on a respective coil for j oint rotation with the wheels, the teeth successively passing through an electromagnetic field between a respective magnet and a respective coil in the respective gap to generate the electrical pulses.

19. The arrangement of claim 18, wherein the light sources on each outer skate portion are successively arranged in a predetermined pattern.

20. The arrangement of claim 18, wherein the skate has two mirror-symmetrically arranged assemblies, each wheel being journaled on a respective assembly.
